Europäisches Patentamt

European Patent Office

Office européen des brevets

(11) Publication number: **0 091 191**
**B1**

(12) **EUROPEAN PATENT SPECIFICATION**

(45) Date of publication of patent specification: **31.05.89**

(21) Application number: **83301019.2**

(22) Date of filing: **25.02.83**

(51) Int. Cl.⁴: **G 05 D 13/62, G 11 B 15/46**

(54) **Phase detector control for a servo system.**

(30) Priority: **02.04.82 US 364964**

(43) Date of publication of application:
**12.10.83 Bulletin 83/41**

(45) Publication of the grant of the patent:
**31.05.89 Bulletin 89/22**

(84) Designated Contracting States:
**CH DE FR GB LI NL**

(56) References cited:
**GB-A-2 012 999**
**US-A-3 582 541**
**US-A-4 155 033**
**US-A-4 242 619**

**IEEE TRANSACTIONS ON MAGNETICS, vol.**
**MAG-17, no. 4, July, 1981, pages 1435-1437,**
**New York, US R.W. VAN PELT:**
**"Microprocessor controlled tape motion"**

(73) Proprietor: **AMPEX CORPORATION**
**401 Broadway M.S. 3-35**
**Redwood City California 94063-3199 (US)**

(72) Inventor: **Louth, Kenneth**
**353 Bellevue Court**
**Los Altos California (US)**

(74) Representative: **Horton, Andrew Robert Grant**
**et al**
**BOWLES HORTON Castle House 89 High Street**
**Berkhamsted Hertfordshire HP 4 2DF (GB)**

Courier Press, Leamington Spa, England.

## Description

The present invention generally relates to servo systems and, more particularly, to a phase detection control of a variable in a servo system where the phase is discretely measured.

The present invention is adapted to control a variable where the phase is discretely measured, such as a motor having a tachometer of an optical type, for example. More particularly, in the environment of the disclosure of the apparatus described herein, it is associated with a capstan servo of a recording and reproducing apparatus. Obviously, the apparatus of the present invention is adapted to detect the phase and control a drive motor for a rotatable member or of any other type of variable drive where the phase is discretely measured. Many prior art phase detection servo controlled systems are direction sensitive to the reference or to the measured feedback direction. Such systems are susceptible to running away if the control variable rate exceeds the reference rate in the reverse direction.

Accordingly, it is an object of the present invention to provide a phase detection servo control of such a variable which is incapable of running away due to any direction sensitivity of either the reference or the feedback or because of any upper or lower limits that are imposed by the circuitry.

A further object of the present invention is to provide a phase detection and servo control system of the foregoing type which automatically eliminates the possibility of reverse run away if the control variable rate exceeds the reference rate in the reverse direction.

A preferred object of the present invention is to provide an improved phase detection control for a servo system of the foregoing type which accomplishes the foregoing objects simply and inexpensively due to its superior design which has relatively few circuit components.

The servo apparatus known from GB—2012999A has features corresponding to those in the premable of claim 1.

The invention provides servo apparatus for controlling the speed of a movable member, comprising means for providing a two-level reference signal having transitions between levels at a rate indicative of a desired speed of the movable member, means for providing a two-level feedback signal having transitions between levels at a rate indicative of the actual speed of the movable member, a phase difference between transitions of the reference signal and the feedback signal respectively being indicative of a difference between the speed of the movable member and the desired speed, a counter capable of counting clock pulses to provide a pulse count in accordance with the phase difference and drive means responsive to the pulse counter for adjusting the speed of the movable member, characterised by latches responsive to each clock pulse and the contemporaneous level of each signal to provide respective latched signal levels for the duration of a clock pulse period and a logic circuit, responsive to the latched levels and a direction signal which indicates the direction of movement of the movable member relative to a reference direction corresponding to a normal direction of movement of the member, the logic circuit enabling the counter to count selectively up and down, the direction of count depending on the directional sense of the phase difference, when the said direction signal indicates that the direction of movement of the member is the same as the reference direction and controlling the counter to count in only one direction when the direction signal indicates that the direction of movement of the member is different from the reference direction.

Description of the drawings

Figure 1 is a functional block diagram illustrating the functional interaction of a microprocessor with the various servo systems of the apparatus, and of the microprocessor and other important circuitry;

Figure 2 is another functional block diagram of the microprocessor and illustrates the manner in which it receives input information relating to the operation of the apparatus and provides output signals that are used to control the operation of the apparatus;

Figures 3a and 3b are very broad flow charts illustrating the software functional operation of the microprocessor;

Figure 4 is a functional block diagram of the capstan servo system;

Figures 5a and 5b together comprise a detailed electrical schematic diagram illustrating the microprocessor together with machine control interfacing circuitry and multiplexing analog-to-digital converting circuitry; and

Figures 6a and 6b together comprise a detailed electrical circuit schematic diagram of the capstan servo circuitry of the apparatus, which detailed circuitry carries out the operation of the block shown in Figure 4.

Description of the apparatus

Broadly stated, the phase detection control apparatus of the present invention is described in the environment of an apparatus which includes a microprocessor that effectively controls the major servo systems of a tape recording and reproducing apparatus, including servos which control the scanning drum operation, the automatic scan tracking, the reels and the capstan, the last of which includes the specific phase detection circuitry that embodies the present invention. Since the servos other than the capstan servo are not particularly relevant to the present invention, they are not described herein, but for a full and comprehensive description of the entire servo system, reference is made to our co-pending European Patent Application No. 83301016.8 filed 25th February 1983 (publication No. 0091188).

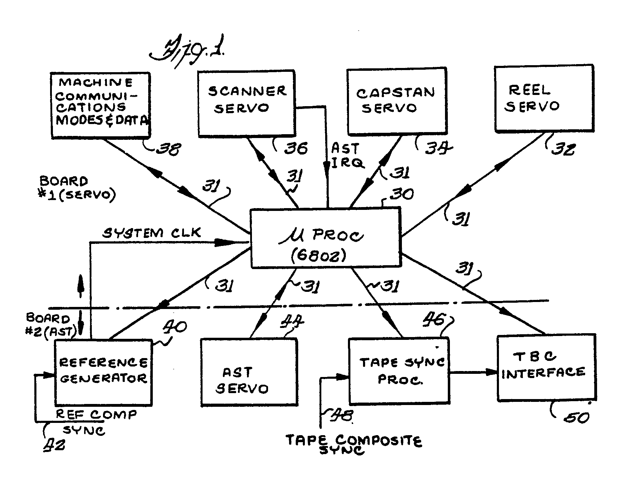

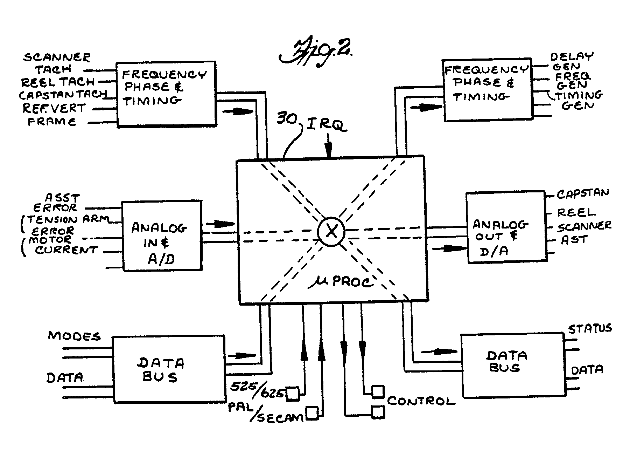

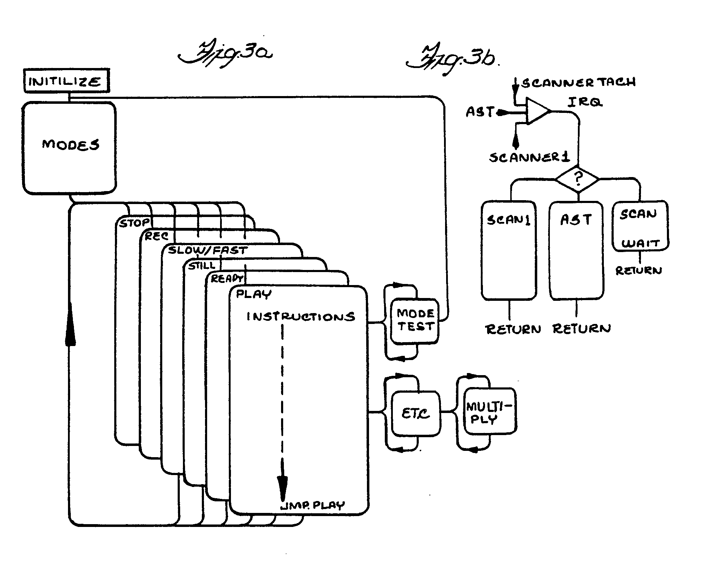

In block diagram of Figure 1 is shown a microprocessor 30 which is interconnected by a data bus 31 with a reel servo 32, a capstan servo 34, a scanner servo 36 and a machine communication interface and data 38 which essentially controls the various modes of the recording and reproducing apparatus as manipulated by an operator or from a remote location. The microprocessor also interacts with a reference generator 40 which receives as an input thereto a reference station composite sync signal via line 42 and the reference generator generates system clocks which clock the microprocessor and which in turn synchronizes all of the clock timing of the servos and other circuitry. The microprocessor also interacts with the automatic scan tracking servo 44 and a tape sync processor 46 which has a tape composite sync signal input via line 48. The tape sync processor additionally provides a signal to the time base corrector interface 50 which provides appropriate timing and control signals for use by the time base corrector to provide a broadcast quality video image having the requisite stability and vertical position with respect to system reference as well as the correct chroma information, which processing varies depending upon what reproducing mode the apparatus is being operated.

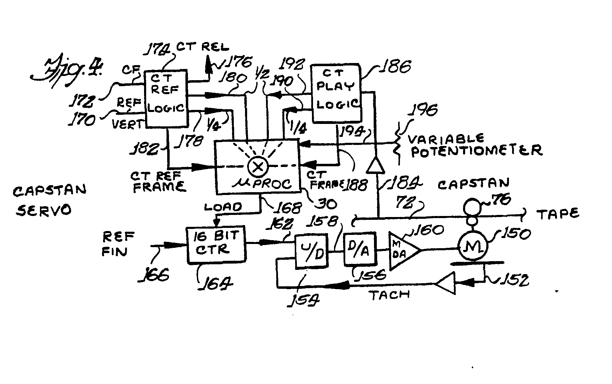

While the functional block diagrams shown in Figure 1 illustrate the interaction of the microprocessor with the various servo systems of the apparatus, with machine control and with the time base corrector and the like, the system can also be functionally described in terms of input and output signals that are provided to and from the microprocessor and this functional block diagram is shown in Figure 2. The microprocessor 30 receives frequency, phase and timing data shown by the upper left functional block including such input signals as scanner tach pulses, reel tach pulses, capstan tach pulses, reference vertical and frame timing signals, which is converted into digital information for processing by the microprocessor. The microprocessor also receives analog information shown by the block left of the microprocessor which is converted into digital information for processing by the microprocessor and such analog input signals include the automatic scan tracking error signals, the tension arm error signals and various motor currents from the reel drive motors, the capstan drive motor and the scanner drive motor. The data bus also receives operating mode information as well as other machine control data and it processes this information and provides status information and other data. The microprocessor generates digital information which is converted to analog information and these analog output signals include control signals for the capstan servo, the reel servo, the scanner servo and the automatic scan tracking servo. Similarly, the microprocessor provides frequency, phase and timing output information which include delay signals, phase and timing output information that are used by the various servos and other circuits.

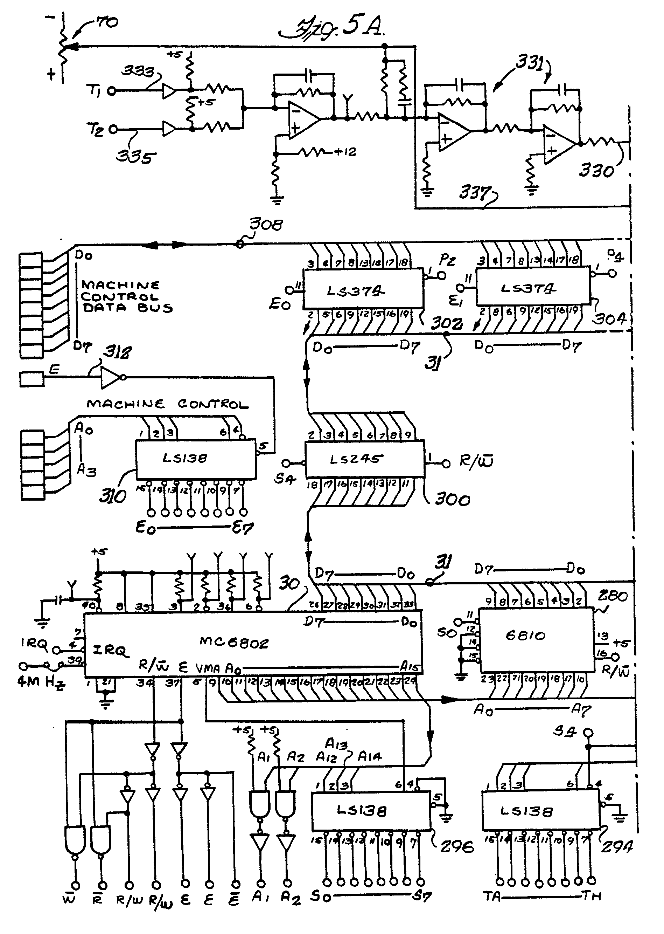

The apparatus is programmed to operate in various operating modes as is shown in the broad flow chart of Figure 3a. The flow chart representing microprocessor software shows that once the machine is initialized, a mode is selected and these modes include stop, record, slow and fast motion reproduce, stop motion or still frame reproduce, ready and normal play. Once the apparatus is placed in an operating mode, then it undergoes a mode test to determine if it is a valid mode and if such is the case, it will return to that mode and begin running the program that controls the apparatus in that mode. If the mode test is invalid, then it will return to the stop mode and the apparatus will stop. After the apparatus is placed in a valid mode, it will continue in that mode until some event occurs, such as a mode change or a completion of some operation. Included as part of each operating mode are various subroutines which are called as shown in Figure 3a. Certain ones of these subroutines are used in various ones of the operating modes. For example, the play mode will contain a block of code instructions that will call up various subroutines in the specified order. As long as the apparatus is operating in the play mode it will repetitively go through this block of code instructions. When the scanner tachometer pulse occurs, it will cause an interrupt to the microprocessor as shown in Figure 3b.

The microprocessor operates on an interrupt basis, with an interrupt resulting from one of three inputs. The software determines which input caused the interrupt and the microprocessor then enters the appropriate block of code which runs through various subroutines until it reaches the end and then returns to the instruction that had previously been completed prior to the interrupt. The scanner tachometer pulse originally triggered a counter which has a count that exceeds the maximum time required to store all current relevant information in stack registers in the microprocessor. When this is done, it is ready to immediately perform the instructions in the scanner 1 block of code. This is carried out by the scanner interrupt block of code which causes the microprocessor to store in the information and then literally wait for the scanner 1 interrupt. After the scanner 1 block of code is run, the microprocessor removes the information from the stack registers and resumes running through the instructions specified by the operating mode.

Complete software for operating the microprocessor for controlling all of the servos and other operations shown in the block diagrams of Figures 1, 2, 3a and 3b is contained in the aforementioned European Patent Application No. 83301016.8 and need not be repeated here.

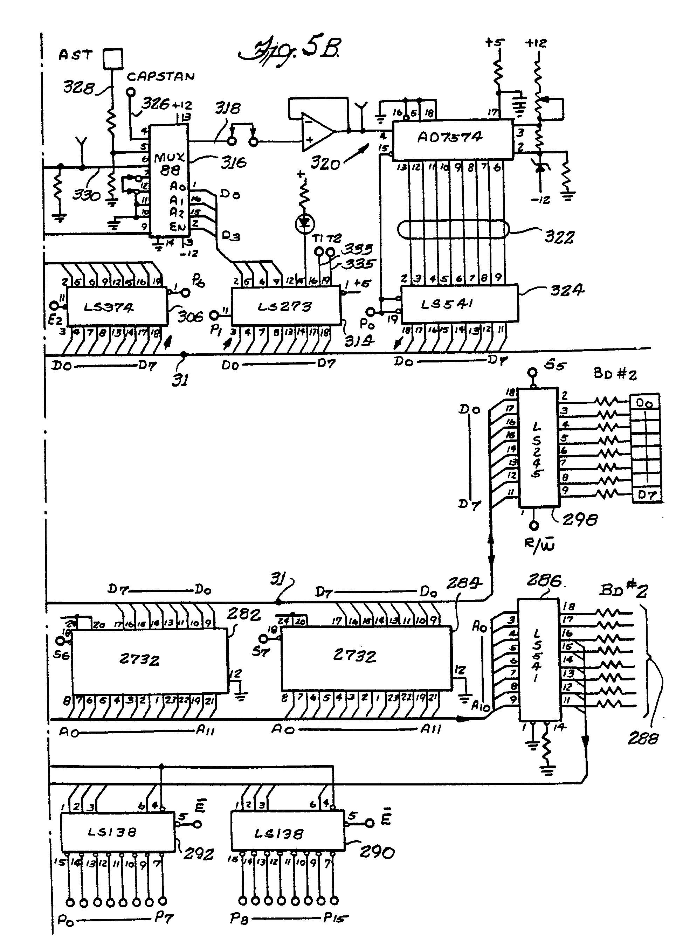

From the illustration of Figure 4 of that application it should be appreciated that the entire operation of all of the servos and other operations shown in the block diagram of Figures 1 and 2 are carried out utilizing less than 4 K of program. The operation of the capstan servo will now be broadly described followed by a more detailed description of a specific embodiment.

**Broad capstan servo description**

The capstan servo is illustrated by the functional block diagram of the accompanying Figure 4. The tape 72 is controlled by the capstan 76 which has a drive motor 150 with an associated tachometer, the tachometer providing tachometer pulses on line 152 which provides an inner servo loop function. The tachometer signal is applied to an up/down counter 154 the output of which is applied to a digital-to-analog converter 156 via line 158 and its output is fed to a motor drive amplifier 160 that controls the motor 150. The up/down counter 154 also has an input line 162 provided by a 16-bit counter 164 which has as a reference frequency a 4 MHz signal applied thereto via line 166. The counter essentially controls the frequency of the reference signal that is applied to the up/down counter through its output line 162. The microprocessor 30 loads a number into the counter via line 168 which essentially controls the output frequency on line 162. Varying the number that is loaded into the counter 164 changes the division function to thereby vary the output reference signal frequency and thereby vary the speed of the capstan. The upper left hand portion of the block diagram illustrates the control track reference logic function which has inputs comprising the reference vertical information via line 170, the color framing information via line 172. These signals enable logic circuitry 174 to generate a control track record signal on line 176, 1/4 frame and 1/2 frame rate signals on lines 178 and 180 and a control track reference frame signal on line 182 which latter three signals are applied to and used by the microprocessor 30 as shown. On the right side is a simialr functional circuit which utilizes control track playback signal information from line 184 obtained from the tape during reproducing. Control track play logic circuitry 186 provides a control track frame rate signal on line 188, 1/4 frame and 1/2 frame rate signals on lines 190 and 192, which signals are also applied to the microprocessor. The microprocessor determines whether the recorder must perform a color frame match operation. If the apparatus is operating as a 525 line NTSC recording and reproducing apparatus, it will color frame match using the 1/2 frame rate signal and if it is operating as a 625 line PAL or SECAM system, it will color frame match using the 1/4 rate signal. The control track play logic therefore is adapted to control the tape so that proper color framing is achieved.

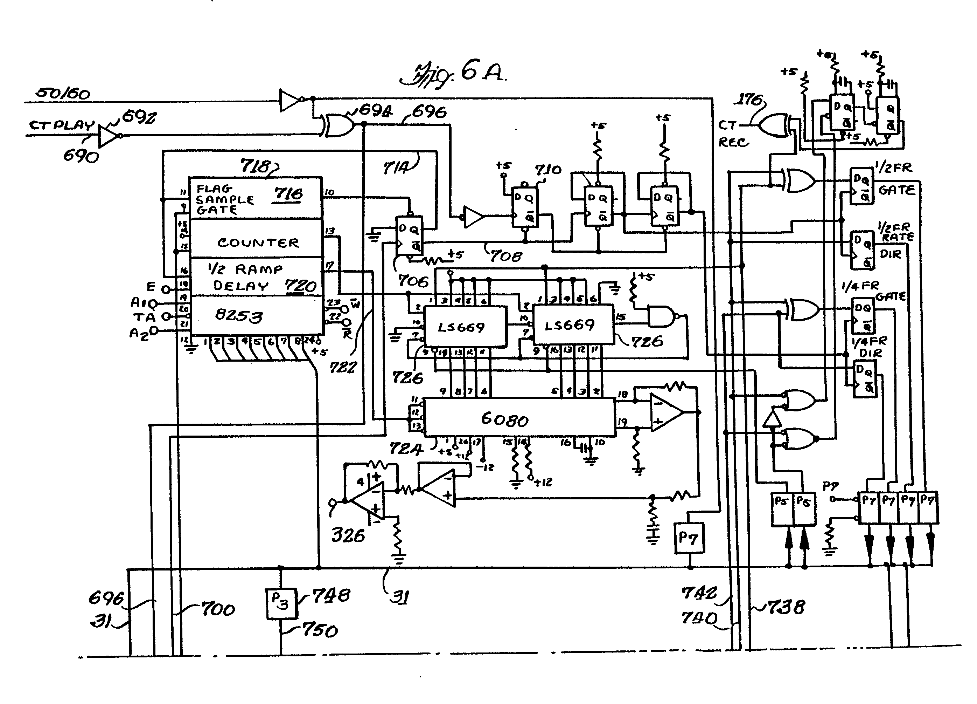

There is also an input line 154 to the microprocessor which applies a signal from a variable control potentiometer 196 on the front panel of the recorder which controls the capstan and therefore the tape speed. The variable control signal is converted from analog to digital form for use by the microprocessor, which could be done by the analog-to-digital converter shown in Figures 5a and 5b if desired. The digital variable control signal is applied to the microprocessor when then applies a corresponding digital word to the counter 164 for controlling the speed. As is described in EP—A—0091190, the control is non-linearized and programmable to provide nonlinear control of capstan speed as a function of the potentiometer position and the actual tape speed.

**The microprocessor circuitry**

Before describing the detailed electrical circuit schematic diagrams of the various servos that have been previously described with respect to functional block diagrams, the schematic diagrams which contain the microprocessor 30 itself will be briefly described in connection with Figures 5a and 5b which together comprise a single schematic. As previously mentioned, and as has been shown by the block diagram of Figure 1, the bulk of the circuitry of the apparatus described herein is contained on only two printed circuit boards and one of said printed circuit boards contains the microprocessor itself. The layout of the circuitry is such that address control of bidirectional buffers enables the data bus from the microprocessor to be connected to either the first or the second printed circuit board. As shown in Figure 5a, the microprocessor 30, which is a Motorola integrated circuit Model MC 6802 has 16 address lines which address circuit components as well as specific addresses of memory circuits. As shown on the lower portion of the microprocessor 30 in Figure 5a, address lines $A_0$ through $A_{15}$ extend rightwardly to a random access memory 280 which is controlled by address lines $A_0$ through $A_7$, as well as respective programmable read only memories 282 and 284 (Figure 5b) which are controlled by address lines $A_0$ through $A_{11}$. The address lines also extend to a buffer 286 which has output lines indicated generally at 288 which extend to the second printed circuit board address lines. The lines 288 also extend downwardly to respective decoder integrated circuits 290 and 292 which are used to select ports $P_0$ through $P_{15}$. The address lines also extend to yet another decoder 294 which provides selection of various programmable timer integrated circuits $T_A$ through $T_H$.

Decoders 290, 292 and 294 are enabled when a master decode enable line $S_4$ is active and this is provided by a master decode circuit 296 located to the left of the decoder 294. As is clearly illustrated, address lines $A_{12}$, $A_{13}$ and $A_{14}$ from the microprocessor 30 control the address selection master decode enable output lines $S_0$ through $S_7$ that activate various portions of the circuitry. For example, when active, the decoded output line $S_0$ enables the random access memory 280, decode output $S_6$ enables the memory 282 and the decode output $S_7$ similarly enables memory 284. The data bus 31 from the microprocessor comprises eight output lines $D_0$ through $D_7$ extending to the memories 280, 282, 284 as well as to bidirectional buffers 298 and 300. Buffer 290 has output lines that extend the data bus to the second printed circuit board, and it is activated by the decode output $S_5$. Activation of the decode output $S_4$ enables the decoders 290, 292 and 294 as well as the other bidirectional buffer 300 which effectively extends the data bus to the remaining circuitry shown in the upper portion of Figures 5a and 5b and to remaining circuitry on board No. 1.

As shown in Figure 5a, the data bus 31 has input latches 302 and 304 connected thereto and an output latch 306 being shown in Figure 5b. The data lines 308 are also connected to these latches and the lines 308 represent a data bus to the machine control system which has a separate microprocessor controlled system for carrying out other machine control functions of the apparatus independently of the system controlled by microprocessor 30. The interaction of operator control and mode switches, diagnostics and the like with the servo system of the present invention is carried out through this data bus via the latches 302, 304 and 306. These latches are respectively enabled by enable lines $E_0$, $E_1$ and $E_2$ which are decoded outputs of a decoder circuit 310 that has operator activated address lines $A_0$ through $A_3$ from the machine control system. The decode circuit 310 is enabled by a line 312 from the machine control system. By selectively enabling decode output lines $E_0$, $E_1$ and $E_2$, data can be input into the latches 302 and 304 for communication onto the data bus of the microprocessor 30 and enabling the latch 306 permits data from the microprocessor 30 to be latched therein for communication to the machine control system via lines 308.

The remaining portion of the circuitry shown in the upper portion of Figures 5a and 5b concern the analog information input that is provided to the microprocessor 30. When port $P_1$ from decoder 292 is active, a latch 314 that is connected to the data bus can receive a data word which decodes an address for controlling a multiplexing· switch 316. The switch 316 selects one of the left inputs thereof for application onto line 318 that extends to an analog-to-digital converter, indicated generally at 320, having output lines 322 which extend to a latch 324 which applies data onto the data bus for use by the microprocessor when a port line $P_0$ is enabled from the address decoder 292.

The multiplexing switch 316 can select a capstan servo control track error signal applied via line 326, an automatic scan tracking movable element position error signal applied via line 328 or a signal that is indicative of the position of the tension arm 70 applied via line 330. The circuitry at the upper portion of Figure 5a provides an analog signal on line 330 that represents the position of the previously described arm through appropriate loop compensation circuitry indicated generally at 331. The arm positional reference for forward and reverse arm locations during shuttle and still frame reproducing is set by coding lines 333 and 335 by means of the output latch 314 from the microprocessor. In addition, line 337 can be selected to measure the actual mechanical arm position for tape threading and unthreading.

## The capstan servo circuitry

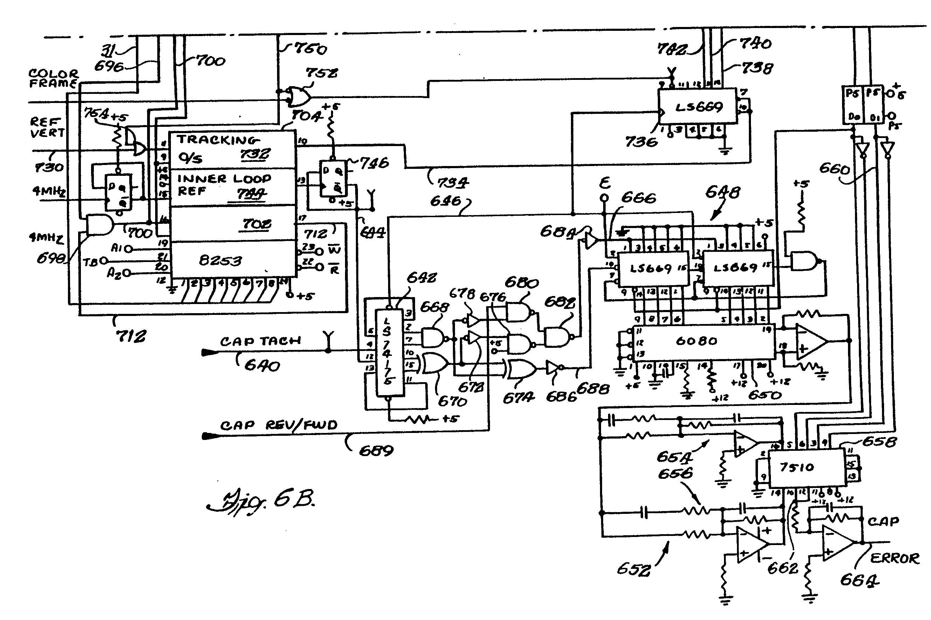

The capstan servo described in the block diagram of Figure 4 embodied by the detailed circuitry shown in Figures 6a and 6b. The capstan tachometer signal is applied on line 640 (Figure 6b) which extends to a D latch which is part of the quad D latch integrated circuit 642 and the reference input frequency signal is applied via line 644. The latches are clocked by the microprocessor output clock E via line 646 and this clock also clocks an up/down counter 648, the output of which is applied to a digital-to-analog converter 650 which provides an analog output signal to the drive amplifier circuitry, indicated generally at 652. The circuitry includes a high gain section 654 and a low gain section 656 and a switching circuit 658 controlled by the microprocessor to either provide a high or low gain error signal. Line 660, controlled by the microprocessor, controls the switching circuit 658 to either apply the high gain signal from the upper circuitry 654 or the low gain signal from the lower circuitry 656 through the switcher onto line 662 which results in the capstan error signal being produced at the output line 664.

The circuitry shown in Figure 6b effectively compares the phase of the reference on line 644 with the phase of the capstan tachometer on line 640 and provides a capstan servo error signal to control the precise speed of the capstan. The illustrated circuitry has the advantage that it does not suffer from common problems that can cause a servo system to run away in that it is incapable of doing so because of the absence of any capstan direction sensitivity or any upper or lower speed limits. The circuitry eliminates the possibility of reverse run away, even if the control variable rate, i.e., the capstan tachometer, exceeds the reference rate in the reverse direction. More specifically, common prior art capstan servos can run away in two different ways. The first can occur if the polarity of the feedback is reversed from that defined according to the normal capstan direction without a corresponding reversal of the generated error. The second way in which the capstan can run away occurs when the up/down counter is permitted to roll-over when the count limit conditions are reached. The present circuitry automatically overcomes these problems by virtue of the fact that it automatically compensates for the capstan. direction or error changes.

The circuitry uses the fully synchronous up/down binary counter 648 and appropriate gating to enable the counter and to control an up/down control line 666. The reference input and tachometer inputs are automatically guided to increment or decrement the counter 648 in accordance with the direction lines. The output of the D latches for the capstan tachometer line 640 is applied to a NAND gate 668 and the reference signal is gated through the D latch and it is connected to an EXCLUSIVE OR gate 670. The NAND gate 668 provides a low output for every positive transition of the capstan tachometer pulse and this low output signal has a duration of one clock period. The reference signal that is applied through the D latch to the EXCLUSIVE OR gate 670 produces a low signal for every transition of the reference signal and this low signal also lasts for one clock period. The output from the EXCLUSIVE OR 670 is applied to an inverter 672, as well as to one input of another EXCLUSIVE OR gate 674, with the output of the inverter 672 being applied to a NAND gate 676. The NAND gate 668 output is applied to an inverter 678, as well as to the other input of the EXCLUSIVE OR gate 674. The output of the inverter 678 is applied to one input of a NAND gate 680 and the outputs of NAND gates 680 and 676 are applied to NAND gate 682, the output of which extends via an inverter 684 and line 666 to the up/down control of the up/down counter 648. The output of the EXCLUSIVE OR gate 674 is applied through an inverter 686 and line 688 to enable the input of the up/down counter 648.

The operation of the logic circuitry is effective to control the up/down control line 666 so as to change the digital value of the counter in the proper direction to reduce the error. If the system contains no error, then the reference and capstan tachometer signals will be coincident and in such event, low outputs will be produced by the NAND gate 668 as well as the EXCLUSIVE OR gate 670 and both inputs will cause the EXCLUSIVE OR gate 674 to disable the up/down counter so that it will neither be incremented or decremented by the clock. If only one of the gates 668 or 670 is active, then the logic circuitry will cause the up/down line to be controlled at the proper signal level so as to either increment or decrement the counter in the correct direction to reduce the error. The gate 680 also has one input supplied by a capstan forward and reverse control line 689 which automatically steers the logic to control the up/down control line so as to reduce the error regardless of the direction the capstan is being driven.

The recorded control track information is used in the conventional manner and this operation is also accomplished under microprocessor control. As shown in Figure 6a, the control track signal on input line 690 is applied through inverter 692 and EXCLUSIVE OR gate 694, whose output appears on line 696 which extends downwardly to an AND gate 698 (Figure 6b) that has its output line 700 applied to the input of a one-shot multivibrator 702 that is part of programmable timer chip 704. Line 700 also extends to clock a D flip-flop 706 (Figure 6a) which has a $\overline{Q}$ output line 708 that clears a flip-flop 710 that provides a playback flag. The free-wheeling one-shot 702 has output line 712 that extends to the other input of the AND gate 698 and the AND gate and one-shot operate to block any spurious control track signals that may be present on line 696 until shortly before the control track pulse is expected to occur, at which time the free-wheeling one-shot changes state to enable the legitimate control track pulse to be applied and be gated through the AND gate 698 and again trigger the one-shot 702. In the event that a control track pulse is not present, then the change of state of the free-wheeling one-shot 702 timing out will similarly cause an output signal on line 712 and the AND gate will provide a clock signal on line 700 to flip-flop 706 in the same manner as would an actual control track pulse. The only difference is that it will be slightly advanced relative to when it should occur which will cause a slight drift in the rate of the control track, but will not be of sufficient magnitude to create any significant problem during the time that control track is not present. An output line 714 from flip-flop 706 is applied to the input of a flag sample gate counter 716 of a programmable timer chip 718 as well as a 1/2 ramp delay one-shot 720, the latter of which provides an output on line 722 which triggers a digital-to-analog converter 724 which samples the value of up/down counter 726 which contains the digital values of the control track signal. The 1/2 ramp delay 720 effectively causes the digital-to-analog converter 724 to sample the value of the counter 726 at the mid-point of the frame signal and properly times the control track playback signal. Stated in other words, the digital-to-analog converter 724 is triggered by the 1/2 ramp delay 720 so that the control track sample which is delayed from the actual control track by 1/2 ramp delay results in the actual control track and the actual reference being in phase.

The capstan servo circuitry programmable timer chip 704 (Figure 6a) reference vertical input signal on line 730 which is applied to a tracking one-shot 732. During reproducing, the tracking one-shot is programmed to directly follow the reference vertical and apply a pulse on output line 734 which is applied to a counter divider 736 that in turn provides various output signals, such as a frame rate signal on line 738, a 1/2 frame rate signal on line 740, and a 1/4 frame rate signal on line 742. During normal operation, the frame signals will be synchronized to reference vertical and is phase adjustable by operation of the control track phase control.

The programmable timer chip 704 and particularly the tracking one-shot 732 therein in that it can be reprogrammed to operate as a rate generator and provide an output that varies slightly relative to the input reference. Thus, the output signal on line 734 may be one count in 40,000 counts different relative to the reference vertical or any other difference can be programmed by the microprocessor so that a definite time compression or expansion of the reproduction can be obtained if desired. This would permit an entire program to be speeded up or slowed down to fit the time slot that is desired and it can be done without removing any particular segment of the program. All that needs to be done is to reprogram the tracking one-shot section of the timer chip 704 to provide a time difference that will result in either a time expansion or compression of the program and all of the program content will still be present during reproducing.

It should be appreciated that when a video tape is recorded on one apparatus and is played back on another, there is an interchange problem which can create time variations that are greatly in excess of the difference that may be programmed into the tracking one-shot. Therefore, to insure that the program will be actually expanded or compressed by the desired amount, it is necessary that the apparatus still maintain control track lock of the capstan servo. When such is done, then the rate generator operation from the tracking one-shot will effectively perform the time expansion or contraction that is programmed into the apparatus as is desired.

To accomplish the asynchronous playback that has been described, reference is made to Figure 6b which has the reference vertical signal applied via input line 730 as previously described. During normal playback, the output of the one-shot 732 provides a delay time that is a function of a control track phase adjustment potentiometer which is located on the front panel of the apparatus and which is a part of the operator controlled machine control system. The output from the tracking one-shot 732 appears on line 734 to the divider 736 and the frame output on line 738 is used to control the up/down line of the counter 726 shown in Figure 6a. The value of the counter is latched into the digital-to-analog converter 724 by the control track playback frame pulse on line 722 which thereby generates a control track error voltage that appears at the output of the digital-to-analog converter 724 and which ultimately results in a signal at output line 326 that is one of the inputs to the analog-to-digital converter circuit 320 shown in Figure 5b. The circuitry of Figure 5b converts the analog value to an 8-bit word that is applied to the microprocessor 30 through the multiplexed analog-to-digital converter 320 shown in Figure 5b. The microprocessor converts the data to a 16-bit word which it applies to an inner loop reference counter 744 (Figure 6b) which clocks a D flip-flop 746 that operates as a divide-by-two and provides the reference input signal on line 644 which closes the control track servo loop.

When the apparatus is operating in the asynchronous playback mode, the microprocessor 30 is programmed to write a high signal to a latch 748 which has an output line 750 that extends to gates 752 and 754 (Figure 6b). The high signal on line 750 effectively disables the loading operations that would occur in the divider 736 and it additionally forces the input to the tracking one-shot 732 high to enable it to begin counting. The tracking one-shot is thereby changed to be a rate generator that produces an output vertical reference frequency that is programmable by the microprocessor. Since the output to the counter 732 is the studio reference clock frequency, the output can be programmed to be different from the normal reference vertical by the expression

$$\frac{F\ \text{input clock}}{\text{Normal count}} \pm \frac{F\ \text{input clock}}{\text{Programmed count}}$$

The programmed count can be derived from a local or a remote source. It should be appreciated that since the tape will be moving at a speed that is slighly different from the normal record or reproduce speed to accomplish the desired time compression or expansion, the automatic scan tracking head will occasionally be required to make a track jump. For this reason, the automatic scan tracking servo and time base corrector operation is switched from normal play to variable play so that the desired track jumps can be carried out.

Conclusion

From the foregoing detailed description, it should be appreciated that an improved phase detection control apparatus has been described which accomplishes the objects previously set forth. The phase detector automatically compensates for the direction of the reference as well as the controlled variable.

**Claims**

1. Servo apparatus for controlling the speed of a movable member, comprising means (166, 164) for provding a two-level reference signal having transitions between levels at a rate indicative of a desired speed of the movable member, means (152) for providing a two-level feedback signal having transitions between levels at a rate indicative of the actual speed of the movable member, a phase difference between transitions of the reference signal and the feedback signal respectively being indicative of a difference between the speed of the movable member and the desired speed, a counter (648) capable of counting clock pulses to provide a pulse count in accordance with the phase difference and drive means responsive to the pulse counter for adjusting the speed of the movable member, characterised by latches (642) responsive to each clock pulse and the contemporaneous level of each signal to provide respective latched signal levels for the duration of a clock pulse period and a logic circuit (650, 682), responsive to the latched levels and a direction signal (689) which indicates the direction of movement of the movable member relative to a reference direction corresponding to a normal direction of movement of the member, the logic circuit enabling the counter (648) to count selectively up and down, the direction of count depending on the directional sense of the phase difference, when the said direction signal indicates that the direction of movement of the member is the same as the reference direction and controlling the counter to count in only one direction when the direction signal indicates that the direction of movement of the member is different from the reference direction.

2. Servo apparatus according to claim 1 in which the logic circuit comprises two NAND gates (680, 676) of which one responds to the latched level corresponding to the feedback signal and to the direction signal and the other responds to the latched level corresponding to the reference signal and to a fixed level, and a third NAND gate (682) responsive to the outputs of the said two NAND gates and arranged to control an up/down control line (666) for the counter 648).

3. Servo apparatus according to claim 1 or claim 2 in which the logic circuit is arranged to prevent counting by the counter when the said latched levels denote a phase match between the feedback signal and the reference signal.

4. Servo apparatus according to claim 3 in which the logic circuit comprises an EXCLUSIVE-OR gate (674) which responds to the latched levels and controls an enabling input (688) of the counter (648).

5. Servo apparatus according to any foregoing claim in which the movable member is a tape-driving capstan.

**Patentansprüche**

1. Servosystem zur Regelung der Geschwindigkeit eines beweglichen Elementes, mit Mitteln (166, 164) zur Erzeugung eines zweipegeligen Referenzsignals, das Übergänge zwischen Pegeln mit einer ein Maß für eine gewünschte Geschwindigkeit des beweglichen Elementes darstellenden Steigung aufweist, mit Mitteln (152) zur Erzeugung eines zweipegeligen Rückkoppelsignals, das Übergänge zwischen Pegeln mit einer ein Maß für die tatsächliche Geschwindigkeit des beweglichen Elementes darstellenden Steigung aufweist, wobei eine Phasendifferenz zwischen Übergängen des Referenzsignals bzw. des Rückkoppelsignals ein Maß für eine Differenz zwischen der Geschwindigkeit des beweglichen Elementes und der gewünschten Geschwindigkeit ist, mit einem Taktimpulse zählenden Zähler (648) zur Erzeugung einer Impulszählung in Abhängigkeit von der Phasendifferenz und mit vom Impulszähler angesteuerten Treibermitteln zur Einjustierung der Geschwindigkeit des beweglichen Elementes, gekennzeichnet durch auf jeden Taktimpuls und den gleichzeitigen Pegel jedes Signals ansprechende Puffer (642) zur Erzeugung entsprechender gepufferter Signalpegel für die Dauer einer Taktsignalperiode und durch eine auf die gepufferten Pegel und ein die Bewegungsrichtung des beweglichen Elementes relativ zu einer Referenzrichtung entsprechend einer Normalrichtung der Bewegung des Elementes angebendes Richtungssignal (689) ansprechende Logikschaltung (650, 682), welche den Zähler (648) zur selektiven Aufwärts- und Abwärtszählung wirksam schaltet, wobei die Zählrichtung vom Richtungssinn der Phasendifferenz abhängt, wenn das Richtungssignal anzeigt, daß die Bewegungsrichtung des beweglichen Elementes die gleiche ist wie die Referenzrichtung und wobei der Zähler nur in eine Richtung zählend gesteuert wird, wenn das Richtungssignal anzeigt, daß die Bewegungsrichtung des Elementes sich von der Normalrichtung unterscheidet.

2. Servosystem nach Anspruch 1, in dem die Logikschaltung zwei NAND-Gatter (680, 676), von denen eines auf dem Rückkoppelsignal entsprechenden gepufferten Pegel und das Richtungssignal und das andere auf den dem Referenzsignal und einem festen Pegel entsprechenden gepufferten Pegel anspricht, und ein auf die Ausgangssignale der beiden NAND-Gatter ansprechendes und zur Ansteuerung einer Aufwärts/Abwärts-Steuerleitung (666) für den Zähler (648) dienendes NAND-Gatter (682) aufweist.

3. Servosystem nach Anspruch 1 oder 2, in dem die Logikschaltung zur Unterbindung des Zählens durch den Zähler dient, wenn die gepufferten Pegel eine Phasenanpassung zwischen dem Rückkoppelsignal und dem Referenzsignal anzeigen.

4. Servosystem nach Anspruch 3, in dem die Logikschaltung ein Exclusiv-ODER-Gatter (674) aufweist, das auf die gepufferten Pegel anspricht und einen Freigabeeingang (688) des Zählers (648) ansteuert.

5. Servosystem nach den vorhergehenden Ansprüchen, in dem das bewegliche Element ein Bandantriebs-Kapstan ist.

**Revendications**

1. Asservissement destiné à commander la vitesse d'un organe mobile, comprenant des moyens (166, 164) pour produire un signal de référence à deux niveaux présentant des transitions entre les niveaux à un rythme représentatif d'une vitesse désirée de l'organe mobile, des moyens (152) pour produire un signal de rétroaction à deux niveaux ayant des transitions entre les niveaux à un rythme représentatif de la vitesse réelle de l'organe mobile, une différence de phase entre des transitions respectives du signal de référence et du signal de rétroaction représentant une différence entre la vitesse de l'organe mobile et la vitesse désirée, un compteur (648) capable de compter des impulsions d'horloge pour fournir un compte d'impulsions qui correspond à la différence de phase, et des moyens de commande qui fonctionnent sous la dépendance du compteur d'impulsions de façon à régler la vitesse de l'organe mobile, caractérisé par des bascules (642) qui réagissent à chaque impulsion d'horloge et au niveau simultané de chaque signal en produisant des niveaux de signal mémorisés respectifs pendant la durée d'une période d'impulsion d'horloge, et un circuit logique (650, 682), qui réagit aux niveaux mémorisés et à un signal de direction (689) qui indique la direction du mouvement de l'organe mobile par rapport à une direction de différence correspondant à une direction de mouvement normale de l'organe, ce circuit logique permettant au compteur (648) de compter sélectivement en sens croissant et décroissant, le sens du comptage dépendant du sens de la différence de phase, lorsque le signal de direction indique que la direction du mouvement de l'organe est identique à la direction de référence, et le circuit logique commandant le compteur de façon qu'il ne compte que dans une seule direction lorsque le signal de direction indique que la direction du mouvement de l'organe est différente de la direction de référence.

2. Asservissement selon la revendication 1, dans lequel le circuit logique comprend deux portes NON-ET (680, 676) parmi lesquelles l'une réagit au niveau mémorisé correspondant au signal de rétroaction et au signal de direction, et l'autre réagir au niveau mémorisé correspondant au signal de référence et à un niveau fixé, et une troisième porte NON-ET (682) qui réagit aux signaux de sortie des deux portes NON-ET et qui est connectée de façon à commander une ligne de commande de sens croissant/décroissant (666) pour le compteur.

3. Asservissement selon la revendication 1 ou la revendication 2, dans lequel le circuit logique est conçu de façon à empêcher le comptage par le comptuer lorsque les niveaux mémorisés indiquent une concordance de phase entre le signal de rétroaction et le signal de référence.

4. Asservissement selon la revendication 3, dans lequel le circuit logique comprend une porte OU-EXCLUSIF (674) qui réagit aux niveaux mémorisés et qui commande une entrée de validation (688) du compteur (648).

5. Asservissement selon l'une quelconque des revendications précédentes, dans lequel l'organe mobile est un cabestan d'entraînement de bande.

Fig. 1.

MACHINE COMMUNICATIONS MODES & DATA — 38

SCANNER SERVO — 36

CAPSTAN SERVO — 34

REEL SERVO — 32

BOARD #1 (SERVO)

31

AST IRQ

31

30

SYSTEM CLK

μ PROC (6802)

31

31

31

31

31

BOARD #2 (AST)

REFERENCE GENERATOR — 40

AST SERVO — 44

TAPE SYNC PROC. — 46

TBC INTERFACE — 50

REF COMP SYNC — 42

TAPE COMPOSITE SYNC — 48

_Fig.2._

SCANNER TACH —
REEL TACH —
CAPSTAN TACH —
REF VERT —
FRAME —

FREQUENCY PHASE & TIMING

FREQUENCY PHASE & TIMING

— DELAY GEN
— FREQ GEN
— TIMING GEN

30, IRQ

ASST ERROR —
(TENSION ARM ERROR —
(MOTOR CURRENT —

ANALOG IN & A/D

X

μ PROC

ANALOG OUT & D/A

— CAPSTAN
— REEL
— SCANNER
— AST

MODES —

DATA —

DATA BUS

525/625
PAL/SECAM

CONTROL

DATA BUS

— STATUS

— DATA

2

Fig.3a

Fig.3b.

Fig. 4.

Fig. 5A.

Fig. 5B.

Fig. 6 A.

Fig. 6B.

EP 0 091 191 B1